# EUROPEAN PATENT SPECIFICATION

(11) **EP 3 094 559 B1**
(45) Date of publication and mention of the grant of the patent: **15.08.2018**
(21) Application number: 14838806.9
(22) Date of filing: 26.11.2014
(51) Int. Cl.: B64C 31/06, B63B 35/79

(54) **ARC-TYPE WING EQUIPPED WITH ADJUSTABLE JUNCTION SYSTEM OF BRIDLES**
MIT VERSTELLBAREM LEINENVERBINDUNGSSYSTEM AUSGESTATTETER, BOGENARTIGER FLÜGEL
AILE DE TYPE ARC ÉQUIPÉE D'UN SYSTÈME DE JONCTION RÉGLABLE À BRIDES

(30) Priority: 14.01.2014 IT TO20140017
(43) Date of publication of application: 23.11.2016
(73) Proprietor: Kite Gen Research S.R.L., 10099 San Mauro Torinese (TO) (IT)
(72) Inventor: MASSIMO, Ippolito, 10099 San Mauro Torinese (TO) (IT)
(74) Representative: Garavelli, Paolo
(86) International application number: PCT/IT2014/000315
(87) International publication number: WO 2015/107556

(56) References cited:
- FR-A1- 2 845 970
- FR-A1- 2 850 355
- US-A- 5 931 416
- US-A1- 2006 065 787

## Description

The present invention deals with an arc-type wing equipped with adjustable junction system of bridles.

An arc-type wing falls within systems for extracting energy from wind through ultra-light wings, with high aerodynamic efficiency, subjected to high wing loads, under tension-structure mode.

An arc-type wing is subjected only with pure tensional forces generating an aerodynamic lift useful, at the same time, both for keeping its own shape, and for generating energy.

The terms used in this document have the following meaning:
- attack angle, is the angle between the wing chord of any aerodynamic profile and the apparent wind. For an arc-type wing the global attack angle is generally considered as the angle between the apparent wind and the mean line of the aerodynamic chord profiles in the central span section;
- center of pressure, is the point in which all aerodynamic forces generated by an aerodynamic profile can be considered as acting. For wing profiles of an arc-type wing, the center of pressure is between 10-20% of the chord;
- chord line, is a line traced through the wind section from the front edge to the outlet edge;
- aerodynamic efficiency L/D, is the ratio between the lift forces L with respect to the drag forces D at a given wind speed;
- load line for an arc-type wing, is the line from tip to tip passing by the center of pressure of all sections composing the wing;
- heading up, is the trend of the attack angle of an arc-type wing to become suddenly negative;
- stall resistance, it is desirable that arc-type wings have a small stall speed and that they can recover from a possible stall with a minimum increase of the apparent wind;
- wind sliding attitude, is a flight condition in which the arc-type wing flies under an oblique attack situation;
- productive attitude, is the flight condition in which the arc-type wing is able to perform its work.

An arc-type wing can be connected to a pair of power ropes of a high-altitude plant for extracting energy from wind.

It is known how the aerodynamic efficiency of power ropes immersed in a fluid vein affects the wing attitude depending on the apparent wind speed, triggering vibrations and aerodynamic unstableness phenomena caused by a detachment of vortexes along the profile of each power rope.

The modification of the attitude of the arc-type wing implies a sliding of the combination of energetic parameters outside an optimum configuration.

This problem has been dealt with in patent US5931416, in which a wing is disclosed with remotely-controlled attack angle by means of a motored device which allows the front and back sliding of the junction of the end of the power rope.

Document FR-A1-2 845 970 discloses an arc-type wing according to the preamble of claim 1.

Object of the present invention is solving the above prior art problems, by providing an arc-type wing equipped with an adjustable junction system of rear bridles capable of keeping unchanged the attack angle when the geometric configuration of the front bridles changes.

Another object of the present invention is providing an arc-type wing equipped with an adjustable junction system of bridles, composed in particular of a section of central arc connected to front bridles and rear bridles, in which such system comprises at least one pair of shoulders to which such front bridles and rear bridles are connected, each one of such shoulders being adapted to support a wing tail plane comprising an extension equipped with a deviating element of the respective rear bridle.

The above and other objects and advantages of the invention, as will appear from the following description, are obtained with an arc-type wing equipped with an adjustable junction system of bridles as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention, as appears from the enclosed claims.

The present invention will be better described by some preferred embodiments thereof, provided as a non-limiting example, with reference to the enclosed drawings, in which:
- Figures 1 and 2 show schematic side views of an arc-type wing according to the present invention respectively in two different geometric configurations;
- Figure 3 shows a bottom perspective view of an arc-type wing according to the present invention; and
- Figures 4 and 5 show schematic side views respectively of an active and a passive actuators for sliding the attack extension of the rear bridles of the arc-type wing according to the present invention.

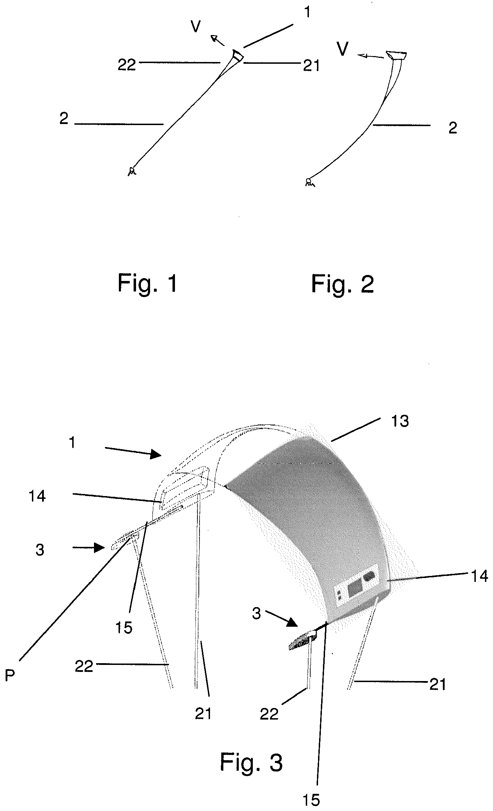

An arc-type wing 1 is connected to a pair of power ropes 2 through at least two pairs of control bridles, each one of which is composed of at least one front bridle 21 and at least one rear bridle 22 (as shown, for example, in Figures 1, 2 and 3).

The arc-type wing 1 can comprise other bridles connected in different points to enable a further check of the attack angle or to avoid inversions during the windward flight.

The arc-type wing 1 is composed of at least one section of central arc 13 laterally connected to each pair of bridles 21 and 22 by interposing at least one respective section of arc, called shoulder, 14 (as shown, for example, in Figure 3).

The aerodynamic efficiency of the power ropes 2 immersed in a fluid vein V affects the attitude of the wing 1 depending on the apparent wind speed. The shape of the power ropes 2 is different from a rectilinear configuration, modifying the slant value of the attack angle (as shown, for example, in Figures 1 and 2).

Advantageously, each one of such shoulders 14 comprises at least one adjustable junction system of the attack point P at least of the respective rear bridles 22 with respect to the wing 1 itself: for such purpose, this junction system comprises at least one elongation appendix 15 equipped with at least one moving means of the attack point P of the rear bridle 22 along the respective elongation appendix 15 to modify the keying-in attitude angle and the attack angle) of the arc-type wing 1, changing the attack point P of the rear bridle 22 and, consequently, its relative length with respect to the wing 1 (also to facilitate its takeoff).

Each moving means arranged on the respective elongation appendix 15 therefore reaches the main object of regulating the length of the rear bridles 22 of the arc-type wing 1 to re-align the attack angle, thereby restoring the optimum values of the energetic parameters.

Moreover, since the elongation appendix 15 is a rigid connection element between bridles 22 and wing 1 (preferably of the tension-structured type), the appendix 15 transforms 1 the tension-structured wing into a controlled tension-structured wing.

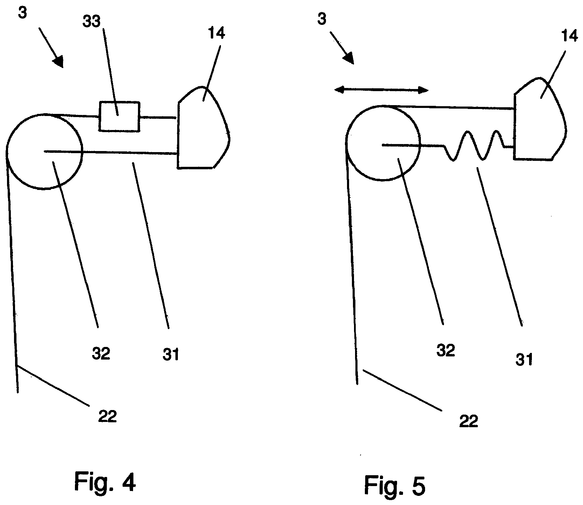

In a preferred embodiment thereof, each moving means comprises a tapered portion 31 equipped with at least one deviating element 32 of at least the rear bridle 22 comprising, for example, at least one idle pulley: each rear bridle 22 is therefore adapted to slide on its respective deviating element 32 by means of at least one servo-assisted actuator 33 (as shown, for example, in Figure 4), or exploiting the elastic deformability of the tapered portion 31 (as shown, for example, in Figure 5). Advantageously, it is possible to provide that the servo-assisted actuator 33 can be remotely controlled to change the length of the rear bridle 22.

With reference in particular to Figures 3, 4 and 5, it is possible to note that each elongation appendix 15 can further be equipped, at least in its end distal part, with at least one wing tail plane 3 adapted to allow to further modify the attitude of the arc-type wing 1.

## Claims

1. Arc-type wing (1), wherein at least one pair of power ropes (2) is connected to said arc-type wing (1) through at least two pairs of control bridles, each one of said pairs of control bridles being composed of at least one front bridle (21) and of at least one rear bridle (22), said wing (1) being composed of at least one section of central arc (13) laterally connected to each one of said pairs of bridles (21, 22) by interposing at least one respective shoulder (14), each one of said shoulders (14) comprising at least one adjustable junction system of an attack point (P) at least of said respective rear bridles (22) with respect to said wing (1), **characterized in that** said junction system comprises at least one elongation appendix (15) equipped with at least one moving means of said attack point (P) of said rear bridle (22) along said elongation appendix (15).

2. Arc-type wing (1) according to the previous claim, **characterized in that** said moving means comprise at least one tapered portion (31) equipped with at least one deviating element (32) at least of said rear bridle (22).

3. Arc-type wing (1) according to claim 2, **characterized in that** said deviating element (32) is at least one idle pulley.

4. Arc-type wing (1) according to claim 2, **characterized in that** said rear bridle (22) is adapted to slide on said deviating element (32) by means of at least one servo-assisted actuator (33).

5. Arc-type wing (1) according to claim 2, **characterized in that** said rear bridle (22) is adapted to slide on said deviating element (32) by means of an elastic deformability of said tapered portion (31).

6. Arc-type wing (1) according to claim 4, **characterized in that** said servo-assisted actuator (33) is remotely controlled to change a length of said rear bridle (22).

7. Arc-type wing (1) according to claim 1, **characterized in that** each elongation appendix (15) is equipped with at least one wing tail plane (3).

## Patentansprüche

1. Bogenförmiger Flügel (1), in dem mindestens ein Paar Leistungsseile (2) mit dem genannten bogenförmigen Flügel (1) durch mindestens zwei Steuergurtpaare verbunden ist, jedes der genannten Steuergurtpaare besteht aus mindestens einem vorderen Gurt (21) und mindestens einem hinteren Gurt (22), der genannte Flügel (1) ist aus mindestens einem mittleren Bogenabschnitt (13) geformt, der seitlich mit jedem der genannten Steuergurtpaare (21, 22) durch Einfügen einer entsprechenden Schulter (14) verbunden ist, jede der genannten Schultern (14) enthält mindestens ein einstellbares Kupplungssystem von mindestens einem Anschlusspunkt (P) der genannten hinteren Gurte (22) gegenüber dem genannten Flügel (1), der **dadurch gekennzeichnet ist, dass** das genannte Kupplungssystem mindestens einen Verlängerungsfortsatz (15) enthält, der mit mindestens einem Verschiebungsmittel des genannten Anschlusspunktes (P) des genannten hinteren Gurtes (22) längs des genannten Verlängerungsfortsatzes (15) ausgestattet ist.

2. Bogenförmiger Flügel (1) gemäß dem vorhergehenden Patentanspruch, der **dadurch gekennzeichnet ist, dass** das genannte Verschiebungsmittel mindestens einen verjüngten Teil (31) enthält, der mit mindestens einem Umleitungselement (32) von mindestens dem genannten hinteren Gurt (22) ausgestattet ist.

3. Bogenförmiger Flügel (1) gemäß Patentanspruch 2, der **dadurch gekennzeichnet ist, dass** das genannte Umleitungselement (32) mindestens eine Losscheibe ist.

4. Bogenflügel (1) gemäß Patentanspruch 2, der **dadurch gekennzeichnet ist, dass** der genannte hintere Gurt (22) dazu dient, am genannten Umleitungselement (32) durch mindestens einen servogesteuerten Antrieb (33) zu gleiten.

5. Bogenflügel (1) gemäß Patentanspruch 2, der **dadurch gekennzeichnet ist, dass** der genannte hintere Gurt (22) dazu dient, am genannten Umleitungselement (32) durch eine elastische Verformbarkeit des genannten verjüngten Teils (31) zu gleiten.

6. Bogenflügel (1) gemäß Patentanspruch 4, der **dadurch gekennzeichnet ist, dass** der genannte servogesteuerte Antrieb (33) fernliegend gesteuert wird, um eine Länge des genannten hinteren Gurtes (22) zu ändern.

7. Bogenflügel (1) gemäß Patentanspruch 1, der **dadurch gekennzeichnet ist, dass** jeder genannte Verlängerungsfortsatz (15) mit mindestens einer abschließenden Flügelfläche (3) ausgestattet ist.

## Revendications

1. Aile en arc (1) où au moins une paire de cordes de puissance (2) est reliée à l'aile en arc (1) à travers au moins deux paires de harnais de commande, chaque paire de harnais de commande étant composée au moins d'un harnais avant (21) et d'un harnais arrière (22) ; l'aile (1) est formée au moins d'une section d'arc central (13) reliée latéralement à chaque paire de harnais (21, 22) à travers l'interposition au moins d'un épaulement correspondant (14) ; chaque épaulement (14) comprend au moins un système de jonction réglable d'un point d'attache (P) des harnais arrière correspondants (22) par rapport à l'aile (1), **caractérisée en ce que** le système de jonction comprend au moins un appendice de prolongement (15) doté au moins d'un moyen de déplacement du point d'attache (P) du harnais arrière (22) le long de l'annexe de prolongement (15).

2. Aile en arc (1), selon la revendication précédente, **caractérisée en ce que** le moyen de déplacement comprend au moins une portion effilée (31) dotée au moins d'un élément de déviation (32) du harnais arrière (22).

3. Aile en arc (1), selon la revendication 2, **caractérisée en ce que** l'élément de déviation (32) est au moins une poulie folle.

4. Aile en arc (1), selon la revendication 2, **caractérisée en ce que** le harnais arrière (22) est apte à coulisser sur l'élément de déviation (32) à l'aide d'un actionneur à commande assistée (33).

5. Aile en arc (1), selon la revendication 2, **caractérisée en ce que** le harnais arrière (22) est apte à glisser sur l'élément de déviation (32) à travers une déformabilité élastique de la portion effilée (31).

6. Aile en arc (1), selon la revendication 4, **caractérisée en ce que** l'actionneur à commande assistée (33) est commandé à distance pour modifier la longueur du harnais arrière (22).

7. Aile en arc (1), selon la revendication 1, **caractérisée en ce que** chaque appendice de prolongement (15) est doté au moins d'un plan alaire de queue (3).
